# EUROPEAN PATENT SPECIFICATION

(11) **EP 1 003 664 B1**
(45) Date of publication and mention of the grant of the patent: **14.04.2004**
(21) Application number: 98940674.9
(22) Date of filing: 19.08.1998
(51) Int. Cl.: B62B 9/26

(54) **TWO-DIMENSIONALLY FOLDING BASKET AND USE THEREOF IN A STROLLER**
ZWEIDIMENSIONALER, KLAPPBARER KORB UND ANWENDUNG DESSELBEN BEI KINDERWAGEN
PANIER PLIABLE EN DEUX DIMENSIONS ET SON UTILISATION DANS UNE POUSSETTE

(30) Priority: 19.08.1997 NL 1006793
(43) Date of publication of application: 31.05.2000
(73) Proprietor: All Our Kids Europe B.V., 6224 LJ Maastricht (NL)
(72) Inventor: BOST, Bart, Willem, Jozef, NL-6221 EW Maastricht (NL)
(74) Representative: Veldman-Dijkers, Cornelia G.C., Ir.
(86) International application number: PCT/NL1998/000470
(87) International publication number: WO 1999/008919

(56) References cited:
- US-A- 4 317 581
- US-A- 4 817 982
- US-A- 4 930 697

## Description

The invention relates to a two-dimensionally folding basket for an umbrella stroller, which comprises two upright sides, an upright rear side and a base.

A basket of this kind is also known from the "Quinny Transformer" from Quinny's "Quality Collection 1997". The Quinny Transformer is an umbrella stroller with a double rear stretcher with which the rear legs can be fixed with respect to one another in the folded-open position. The basket of the Quinny Transformer can be folded up in two dimensions and has a base and two sides. At the rear side, the basket is attached to the stretcher, and at the front side, the basket is suspended from the seat of the stroller. When the stroller is folded up, the basket of the Quinny Transformer is folded up together with the stroller.

In U.S. 4,930,697 a shopping basket for a U-shape foldable stroller, comprising a box-like body with a foldable bottom plate is described, which is suspended from the frame of the stroller. This basket can be detached from the stroller and be carried about.

A drawback of a basket of this nature is that the capacity of a basket of this nature is very limited.

The object of the invention is to provide a basket with a larger volume.

This object is achieved by the fact that the basket comprises means for tensioning the base.

As a result, the basket acquires a larger volume.

A further advantage of the basket according to the invention is that it has an increased dimensional stability in the longitudinal direction and is entirely, or virtually entirely, flat. Owing to the fact that the basket has an increased dimensional stability in the longitudinal direction, the base of the basket may have a larger surface area without the function - that of supporting objects - being lost.

In the present and following text, a two-dimensionally folding basket is understood to mean a basket which can be folded up in at least two dimensions, in such a manner that a virtually linear object remains. A virtually linear object is understood to mean an object whose length is considerably greater than its width and height.

In the present and following text, an umbrella stroller is understood to mean a stroller which can be folded up in three dimensions. Examples of a stroller of this nature are a stroller with a rear cross and a stroller with a double rear stretcher.

An umbrella stroller generally comprises two front legs and two rear legs, and a seat. The front legs are understood to mean those legs which are situated at the front in the direction of travel of the stroller.

A seat is understood to mean a support for one or more children.

A stroller with a rear cross generally comprises two front legs and two rear legs, a push handle and a rear cross which allows the angle between the rear legs and the push handle to be fixed. A base cross makes it possible to fix the width and the angle between front legs and rear legs.

In the case of a stroller with a double rear stretcher, the rear legs are pressed apart when the stroller is folded open and are held in parallel by the double rear stretcher, and the angle between rear legs and front legs is fixed by a lower cross.

A characteristic feature of all umbrella strollers is that they can be folded together in such a manner that a virtually linear object remains.

In the present and following text, a basket is understood to mean a container which can be placed beneath the seat and above the lower cross of the stroller. The container generally comprises a base, an upright front side and rear side and two upright sides. Preferably, the basket comprises a flat base. The container may be made of a mesh-like fabric or plastic, but may also be made of a closely woven fabric or plastic sheet.

The two-dimensionally folding basket according to the invention contains means for tensioning the base. These means may comprise stiffening ribs which are positioned in or in the vicinity of the base or elastic attachment means with which the basket can be attached to a stroller.

If stiffening ribs are used, it is preferable for the basket to comprise two stiffening ribs in or on the base or sides and for at least one end of each of the stiffening ribs to comprise an attachment means for attaching the basket to the umbrella stroller. In this way, the base can be fixed to the stroller. The stiffening ribs may, for example, comprise a rigid strip, tube or rod. The stiffening ribs may be situated in two slots which are formed in the material of the basket or in two flanges arranged at the transition from the base to the side of the basket. Preferably, the stiffening ribs are situated in a transition between the base and the upright sides.

More preferably, the means for tensioning the base comprise elastic attachment means on the front and rear sides of the basket. The advantage of elastic attachment means on the front and rear sides of the basket is that when they are attached to the front legs and rear legs, the base of the basket is also pulled completely taut in the direction transverse to the direction of travel when the stroller is folded open, with the result that a maximum basket volume is produced.

The upright rear side of the basket is generally connected to the rear legs of the stroller. Except for the stroller with the rear cross, umbrella strollers generally comprise a double rear stretcher between the two rear legs. The top side of the basket according to the invention may be attached to this double rear stretcher. It is also possible, in the case of a stroller with a double rear stretcher, to suspend the basket between the legs, with the result that the upright rear side of the basket is pulled taut while the stroller is being folded open. However, this option is not available in the case of the stroller with the rear cross. A stroller with a rear cross generally has two seat tubes which form a triangle with the front legs and rear legs, which are situated on either side of the stroller, and only one suspension point in or in the vicinity of the rear cross. A basket can be suspended between this suspension point and the seat tubes.

Preferably, the basket according to the invention comprises a flexible, preformed rib in the top side of the upright rear side, which rib continues at least into the top edge of the two upright sides. As a result, the basket according to the invention for a stroller with a rear cross can contain a still greater volume than without this feature. A further advantage of the flexible, preformed rib is that it increases the accessibility of the basket.

A flexible, preformed rib is understood to mean an optionally straight tube, or a rod made of a flexible material, for example a plastic. The rib may be straight and be pushed through a slot in the top edges of the upright sides and rear side, but may also be in the form of the top edges of sides and rear side. However, in both cases the rib must have sufficient flexibility to be folded up together with the stroller, when the latter is folded up, to form a virtually one-dimensional object. The use of a preformed rib ensures that the top edge of the basket is opened up, so that its volume is as large as possible. An additional advantage of the basket opening out is that it is easily accessible.

The invention also relates to the use of the basket according to the invention in an umbrella stroller which comprises two front legs and two rear legs, the basket according to the invention being attached to the front legs or rear legs of the umbrella stroller. The advantage of using the basket according to the invention in an umbrella stroller is that the volume of the basket is greater than the volume of the basket used in the known Quinny Transformer stroller. Yet another advantage of the use of the basket according to the invention in an umbrella stroller is that the basket extends between the front legs and the rear legs of the stroller and, in this way, utilizes all the space between front legs and rear legs.

Depending on the desired height and the available space between the lower cross and the seat, the basket according to the invention, when used in an umbrella stroller, may have higher or lower sides, front side and rear side. Preferably, the basket according to the invention is used in an umbrella stroller in such a manner that the sides and the front side and rear side of the basket entirely or partially adjoin that side of the seat which faces towards the basket. As a result, the basket can be entirely or partially closed off at the sides. Partially or completely closing off the basket has the advantage that its security is increased as a result. As a result, not only is it possible to avoid objects which have been placed in the basket from falling out of the basket or from being removed from the basket without permission, but also it is possible to prevent the basket from being used for transporting objects which project out of the stroller.

As an alternative, in order to connect the basket to that side of the seat which faces towards the basket, the basket according to the invention may comprise, in the top edge, a flexible, preformed rib which continues at least into the top edge of the two upright sides. This design with the said flexible, preformed rib has a particular advantage in an umbrella stroller. A stroller of this nature does not have any double rear stretcher to which the basket can be attached. The advantage of using the basket with the abovementioned rib on a stroller with a rear cross is that the volume of the basket is greater than if a basket without this rib is used. It is particularly preferred also to attach the basket to the rear cross. As a result, the back of the basket according to the invention is also stretched, with the result that the volume of the basket becomes greater.

Preferably, the preformed rib continues so far into the top edge of the two upright sides that it is pressed inwards by the seat tubes in the folded-open position of the stroller. As a result, the basket extends as far as beyond the periphery of the base and has an even greater volume.

Even more preferably, a basket is used in which the flexible, preformed rib continues over the entire top edge of the two upright sides. As a result, the sides are stretched over their entire length when the stroller has been folded open, with the result that the volume of the basket becomes greater.

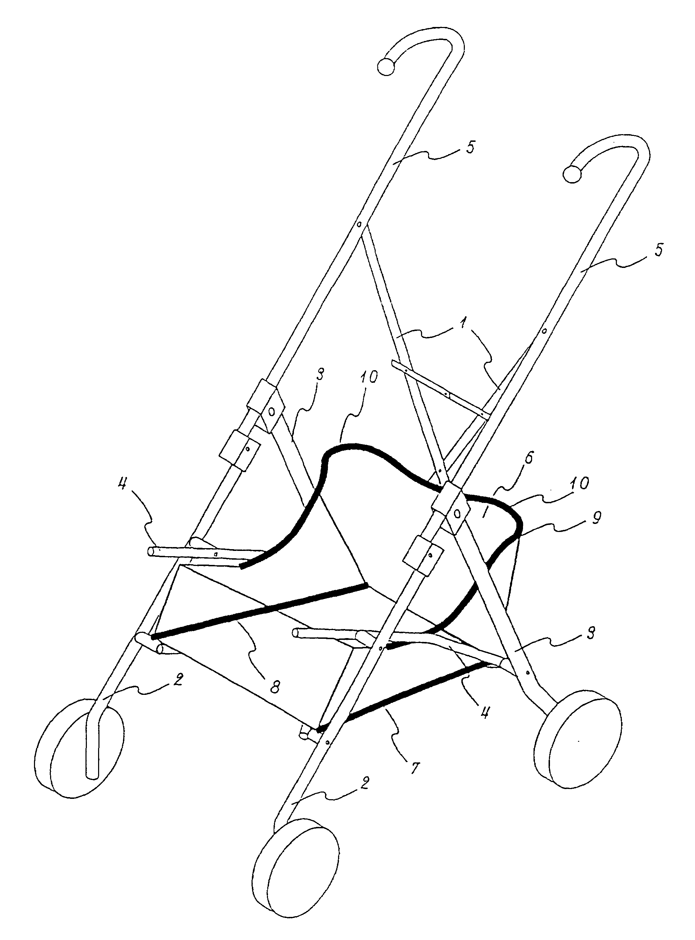

other characteristics and advantages will become clear from the following description made with reference to the appended figure.

The appended figure is a perspective drawing of a stroller with a rear cross, with the seat having been omitted. In this figure, 1 denotes the limbs of the rear cross, 2 denotes the front legs, 3 denotes the rear legs, 4 denotes the seat tubes, 5 denotes the push handles and 6 denotes the basket. The stiffening ribs in the basket according to the invention are indicated by the numbers 7 and 8. It is not illustrated in the drawing that at least one end of each of the stiffening ribs 7 and 8 comprises an attachment means for attaching the basket to the front side of the umbrella stroller. Surprisingly, it has been found that the stiffening ribs do not form any obstacle when folding up the stroller. The flexible, preformed rib is denoted in the drawing by the numeral 9. In the drawing, rib 9 continues so far into the top edge of the two sides that it is pressed inwards by the two seat tubes 4, with the result that the basket, at the points 10, extends as far as outside the periphery of the base, with the result that it is even more accessible. This figure does not show an attachment between the preformed rib and the rear cross. This attachment may be made on one of the two limbs (1) of the rear cross.

## Claims

1. Two-dimensionally folding basket for an umbrella stroller, which comprises two upright sides, an upright: rear side and a base, **characterised in that** the basket comprises means for tensioning the base, comprising stiffening ribs (7,8) which are positioned in or in the vicinity of the base having at least at one end an attachment means for attaching the base of the basket to the umbrella stroller, or comprising elastic attachment means on the front and rear sides of the basket.

2. Basket according to Claim 1, **characterised in that** the upright rear side of the basket contains a flexible, preformed rib (9) in the top edge, which rib continues at least into the top edge of the two upright sides.

3. Use of a basket according to any one of Claims 1-2 in an umbrella stroller at least comprising two front legs and two rear legs and a seat, **characterised in that** the base of the basket is attached to the front lees and/or rear legs of the umbrella stroller.

4. Use of a basket according to any one of Claims 1-2, the sides and the front and rear sides of the basket completely or partially adjoining that side of the seat which faces towards the basket.

5. Use of the basket according to Claim 2 in an umbrella stroller at least comprising two front legs and two rear legs, a push handle and a rear cross which forms a connection between the push handle and the rear legs, **characterised in that** the base of the basket is attached to the front legs and/or rear legs of the umbrella stroller, and **in that** the basket is also attached to the rear cross.

6. Use of the basket according to Claim 5, **characterised in that** the stroller also comprises two seat tubes and the flexible, preformed rib (9) continues so far into the top edge of the two upright sides that the rib is pressed inwards by the seat tubes in the folded-open position of the stroller.

7. Use of the basket according to Claim 5 or 6, **characterised in that** the flexible, preformed rib (9) continues over the entire top edge of the two upright sides.

## Patentansprüche

1. Zweidimensionaler Faltkorb für einen Buggy bzw. einen Klappkinderwagen, der zwei aufrechte Seiten umfasst, eine aufrechte Rückseite und eine Basis, **dadurch gekennzeichnet, dass** der Korb Mittel zum Spannen der Basis aufweist, wobei diese Versteifungsrippen (7,8) aufweisen, die in oder in der Nähe der Basis angeordnet sind und an mindestens einem Ende Befestigungsmittel zum Befestigen der Basis des Korbes am Klappkinderwagen besitzen, oder elastische Befestigungsmittel an den Vorder- und Rückseiten des Korbes aufweisen.

2. Korb nach Anspruch 1, **dadurch gekennzeichnet, dass** die aufrechte Rückseite des Korbes eine flexible, vorgeformte Rippe (9) in der Oberkante aufweist, wobei sich die Rippe mindestens in die Oberkante der beiden aufrechten Seiten fortsetzt.

3. Verwendung eines Korbes nach einem der Ansprüche 1-2 in einem Klappkinderwagen, der mindestens zwei Vorderschenkel bzw. ―beine und zwei Hinterschenkel bzw. ―beine und einen Sitz aufweist, **dadurch gekennzeichnet, dass** die Basis des Korbes an den Vorderbeinen und/oder Hinterbeinen des Klappkinderwagens befestigt ist.

4. Verwendung eines Korbes nach einem der Ansprüche 1-2, wobei die Seiten und die Vorder- und Rückseiten des Korbes vollständig oder teilweise an die Seite des Sitzes angrenzen, die zum Korb hin weist.

5. Verwendung des Korbes nach Anspruch 2 in einem Klappkinderwagen, der mindestens zwei Vorderbeine und zwei Hinterbeine aufweist, einen Schiebehandgriff und ein Rück- bzw. Stützkreuz, das eine Verbindung zwischen dem Schiebehandgriff und den Hinterbeinen bildet, **dadurch gekennzeichnet, dass** die Basis des Korbes an den Vorderbeinen und/oder Hinterbeinen des Klappkinderwagens befestigt ist, und dadurch, dass der Korb auch am Stützkreuz befestigt ist.

6. Verwendung des Korbes nach Anspruch 5, **dadurch gekennzeichnet, dass** der Kinderwagen außerdem zwei Seitenrohre aufweist und die flexible, vorgeformte Rippe (9) sich so weit in die Oberkante der beiden aufrechten Seiten hinein fortsetzt, dass die Rippe durch die Sitzrohre in der aufgefalteten Position des Kinderwagens einwärts gedrückt wird.

7. Verwendung des Korbes nach Anspruch 5 oder 6, **dadurch gekennzeichnet, dass** die flexible, vorgeformte Rippe (9) sich über die gesamte Oberkante der beiden aufrechten Seiten hinweg fortsetzt.

## Revendications

1. Panier pliable en deux dimensions pour une poussette canne qui comprend deux côtés verticaux, une face arrière verticale et une base, **caractérisé en ce que** le panier comprend un moyen pour mettre en tension la base, comprenant des nervures de renforcement (7, 8) qui sont positionnées dans ou à proximité de la base ayant au moins à une extrémité un moyen de fixation pour fixer la base du panier sur la poussette canne, ou comprenant un moyen de fixation élastique sur les faces avant et arrière du panier.

2. Panier selon la revendication 1, **caractérisé en ce que** la face arrière verticale du panier contient une nervure souple préformée (9) dans le bord supérieur, laquelle nervure se poursuit au moins dans le bord supérieur des deux côtés verticaux.

3. Utilisation d'un panier selon l'une quelconque des revendications 1 et 2 dans une poussette canne comprenant au moins deux pieds avant, deux pieds arrière et un siège, **caractérisé en ce que** la base du panier est fixée sur les pieds avant et/ou sur les pieds arrière de la poussette canne.

4. Utilisation d'un panier selon l'une quelconque des revendications 1 et 2, les côtés et les faces avant et arrière du panier étant complètement ou partiellement adjacents au côté du siège qui est tourné vers le panier.

5. Utilisation du panier selon la revendication 2, dans une poussette canne comprenant au moins deux pieds avant et deux pieds arrière, une poignée de manoeuvre et une traverse arrière qui forme un raccordement entre la poignée de manoeuvre et les pieds arrière, **caractérisé en ce que** la base du panier est fixée sur les pieds avant et/ou sur les pieds arrière de la poussette canne, et **en ce que** le panier est également fixé sur la traverse arrière.

6. Utilisation du panier selon la revendication 5, **caractérisé en ce que** la poussette comprend également deux tubes de siège et **en ce que** la nervure souple préformée (9) se poursuit dans le bord supérieur des deux côtés verticaux dans une mesure telle que la nervure est pressée vers l'intérieur par les tubes de siège quand la poussette est dans la position ouverte repliée.

7. Utilisation du panier selon la revendication 5 ou 6, **caractérisé en ce que** la nervure souple préformée (9) se poursuit sur l'ensemble du bord supérieur des deux côtés verticaux.
